Europäisches Patentamt

European Patent Office

Office européen des brevets

(11) Publication number: **0 281 415 B1**

## EUROPEAN PATENT SPECIFICATION

(45) Date of publication of patent specification: **13.10.93**  (51) Int. Cl.⁵: **G11B 27/32**, G11B 27/10

(21) Application number: **88301917.6**

(22) Date of filing: **04.03.88**

(54) **Disc recording and/or reproduction.**

(30) Priority: **05.03.87 JP 50896/87**
 **11.03.87 JP 55537/87**

(43) Date of publication of application:
 **07.09.88 Bulletin 88/36**

(45) Publication of the grant of the patent:
 **13.10.93 Bulletin 93/41**

(84) Designated Contracting States:
 **AT DE FR GB**

(56) References cited:
 **EP-A- 0 024 858     EP-A- 0 029 946**
 **EP-A- 0 074 841     EP-A- 0 164 131**
 **EP-A- 0 169 597     EP-A- 0 215 133**
 **EP-A- 0 275 972     EP-A- 0 288 571**
 **US-A- 4 210 785**

 **PATENT ABSTRACTS OF JAPAN vol. 7, no. 2
 (P-166)(1147) 07 January 1983, & JP-A-57
 162152**

 **PATENT ABSTRACTS OF JAPAN vol. 9, no.
 54 (P-340)(1777) 08 March 1985, & JP-A-59
 191176**

(73) Proprietor: **SONY CORPORATION**
 **7-35 Kitashinagawa 6-chome**
 **Shinagawa-ku**
 **Tokyo 141(JP)**

(72) Inventor: **Ando, Ryo c/o Patents Division**
 **Sony Corporation**
 **7-35 Kitashinagawa**
 **Shinagawa-ku Tokyo 141(JP)**

(74) Representative: **Cotter, Ivan John et al
 D. YOUNG & CO.,
 21 New Fetter Lane
 London EC4A 1DA (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.6/3.3.1)

**Description**

This invention relates to disc recording and/or reproduction.

A disc player dedicated to reproduction, such as a so-called compact disc (CD) player designed to reproduce audio signals or information such as speech or musical sounds that are digitised and recorded on a compact (optical) disc, is available to the market. A compact disc (CD) comprises a programme area in which the audio information (for example a number of tunes) is recorded. Archival information, that is table of contents (TOC) information, indicative of the recorded contents of the disc, such as a time code sequentially indicating start time points of tunes (pieces of music) recorded in the programme area, tune numbers of the first and last tunes, time points at which the performance of the last tune is terminated, and so forth, is recorded in a lead-in area provided inside of the programme area. The CD player is designed so as first to reproduce the TOC information recorded in the lead-in area and then to reproduce the audio (performance) information of the tunes from the programme area on the basis of the TOC information to perform programmed reproduction.

Since conventional CD players are dedicated to reproduction, attempts have been made to develop disc systems which, by employing an opto-magnetic disc formed of a post-writable opto-magnetic recording medium, may be used for recording and reproduction to maintain superior compatability with compact discs.

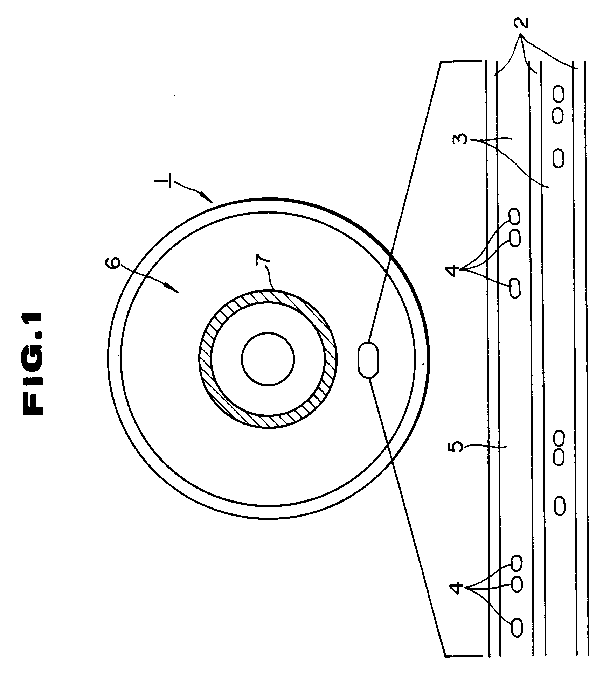

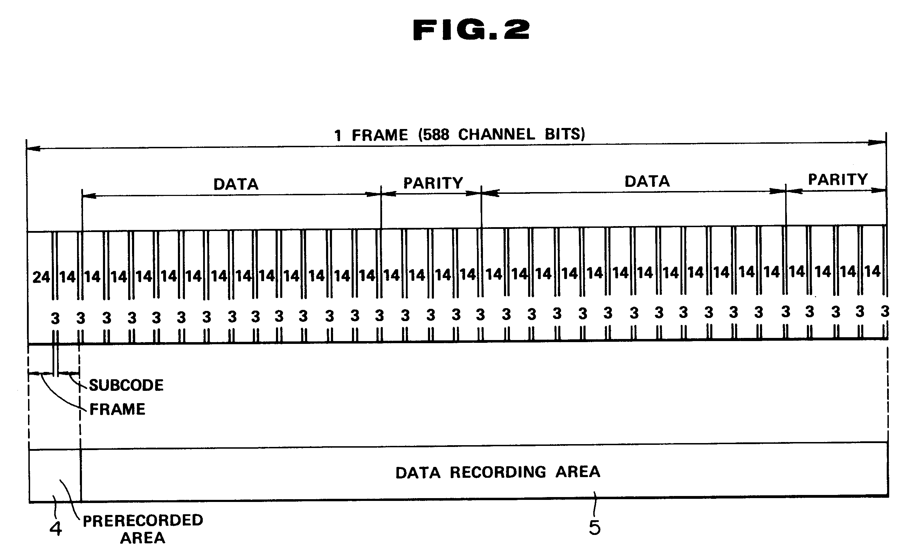

A recordable disc 1 used in such a disc system is shown in Figure 1 of the accompanying drawings. The disc 1 is formed with a number of spirally extending pre-grooves 2 each having a depth of $\lambda/8$, where $\lambda$ is the wavelength of laser light used for recording the information. On each land 3 between adjacent pre-grooves 2, pre-recorded areas 4 (in which a series of patterns of projections and recesses formed by pits having a depth of $\lambda/4$ are previously recorded in the circumferential direction) are formed in alternation with data recording areas 5 where opto-magnetic recording is performed. On the inner side of a programme area 6 of the disc 1 where the performance information is recorded, there is formed a lead-in area 7 where TOC information indicative of the recorded contents of the programme area 6 is recorded. In the pre-recorded area 4 of the recordable disc 1, 24-bit synchronisation (sync) signals and 14-bit (1-symbol) sub-code signals are recorded as patterns of projections and recesses provided by moulding, these sub-code signals being absolute time information or absolute addresses commencing from a start position of the programme area 6. These sync and sub-code signals are included in 588 channel bits of eight to fourteen modulation (EFM) data that include, in addition to the sync and sub-code signals, 14x32 bit (32-symbol) data such as the performance information, parity data and 3 margin bits between adjacent symbols, the 588 channel bits constituting a frame of a standardised compact disc data format, as shown in Figure 2 of the accompanying drawings. European Patent Application No. EP-A-0 164 131 discloses an arrangement of this type in which archive data including so-called chapter numbers and cumulative time value data is recorded in the lead-in area.

In the disc system employing the recordable disc 1, as shown in Figure 1, the rotational velocity of the disc is controlled to a constant linear velocity (CLV) by taking advantage of the absolute addresses reproduced from the pre-recorded areas 4 of the disc, so that the performance information, for example, is recorded in accordance with the standardised compact disc data format, while the TOC information indicating the sequence of the recorded information units, for example, is recorded in the lead-in area 7. The information units in the programme area 6 are sequentially reproduced in accordance with the TOC information contained in the lead-in area 7.

It will be noted that, in a disc system providing for both recording and reproduction and designed for superior compatibility with compact discs, it may occur that tunes recorded in the programme area of the recordable disc are not in the correct sequence. For example, if a new tune is recorded in a non-recorded area between two adjacent tunes, or a new tune is recorded in a previously recorded area, the sequence of the previously recorded tunes necessarily becomes indefinite.

Certain recording and/or reproducing apparatuses, for example as disclosed in European Patent Application No. EP-A-0 074 841, are so designed that TOC information indicating for example the sequence of tunes or record information units is automatically formed and recorded in the lead-in area of the recordable medium, on the assumption that a silent period continuing for longer than a predetermined time represents an interval between adjacent tunes, the information units in the programme area being sequentially reproduced on the basis of the so-formed TOC information. However, in the case of classical music, where silent periods which do not represent intervals between tunes are frequently encountered, the TOC information is recorded in the lead-in area as if plural tunes are recorded in the programme area, when in fact only one tune is actually recorded therein, so that it becomes necessary to perform a complicated operation for management of the respective information units recorded in the programme area.

European Patent Application No. EP-A-0 169 597 discloses a CD player in which the user can store preferred programme selections for particular discs in a memory of the player after which, each time that the particular disc is loaded into the player, the programme selections will be reproduced.

According to one aspect of the invention there is provided a disc recording and/or reproducing apparatus for a recordable disc which is previously provided with absolute addresses, and which has a programme area in which data such as performance information is recorded and a lead-in area in which archival information indicative of the recorded contents of the programme area is recorded whereby the programme area can be reproduced on the basis of the archival information recorded in the lead-in area, the apparatus comprising archival information storage means for storing archival information reproduced from the lead-in area, characterised by change control means for optionally changing the sequence of the archival information stored in the archival information storage means, operating input means for commanding the sequence of the archival information, and recording means for reading the archival information, the sequence of which has been changed, from the archival information storage means for re-recording in the lead-in area of the recordable disc.

According to another aspect of the invention there is provided a method of recording on or reproducing from a recordable disc which is previously provided with absolute addresses, and which has a programme area in which data such as performance information is recorded and a lead-in area in which archival information indicative of the recorded contents of the programme area is recorded whereby the programme area can be reproduced on the basis of the archival information recorded in the lead-in area, wherein archival information reproduced from the lead-in area is stored, characterised in that the sequence of units of the archival information is optionally changed and then re-recorded in the lead-in area, and the programme area is reproduced on the basis of the archival information in the lead-in area.

According to a further aspect of the invention there is provided a method of recording on or reproducing from a recordable disc which is previously provided with absolute addresses, and which has a programme area in which data such as performance information is recorded and a lead-in area in which archival information indicative of the recorded contents of the programme area is recorded whereby the programme area can be reproduced on the basis of the archival information recorded in the lead-in area having been reproduced and stored, characterised in that: archival information indicative of the sequence of information units recorded in the programme area is automatically recorded in the lead-in area on the basis of sensing the absence of the data to be inputted and recorded in the programme area; the stored archival information is corrected on receipt of an operating input during reproduction of the programme area so that the information unit being reproduced will be consecutive to the preceding information unit, the thus-corrected archival information being re-recorded in the lead-in area; and each of the information units recorded in the programme area is sequentially reproduced on the basis of the archival information in the lead-in area.

A preferred embodiment of the invention provides a method of recording and/or reproducing information to and from a disc, using a disc recording and/or reproducing apparatus in which a programme area and a lead-in area are provided on a recordable disc previously provided with absolute addresses, data such as performance information is recorded in the programme area, archival or TOC information is recorded in the lead-in area, and the programme area is reproduced on the basis of the TOC information in the lead-in area, wherein a state of absence of data to be recorded in the programme area is detected, TOC information sequentially indicating information units recorded in the programme area is automatically recorded in the lead-in area so as to provide for more facilitated management of the data or information recorded in the programme area, the TOC information sequentially indicating the information units in the programme area of the recordable disc is reproduced from the lead-in area so as to be stored in TOC information storage means, and the information units in said program area are reproduced on the basis of said TOC information; and wherein, on receipt of an operating input commanding the TOC information to be corrected during reproduction, it is determined that the information unit being reproduced constitutes an information unit together with the preceding information unit and the TOC information stored in the TOC information storage means is accordingly corrected, the so-corrected TOC information being read out from the TOC information storage means so as to be re-recorded in the lead-in area of the recordable disc.

The present invention may be applied, for example, to a performance apparatus for a recordable and reproducible compact disc.

The invention will now be further described, by way of illustrative and non-limiting example, with reference to the accompanying drawings, in which:

Figure 1 shows diagrammatically the recording format of a recordable disc employed in a recording and/or reproducing apparatus embodying the invention;

Figure 2 shows diagrammatically the data format of information recorded on the recordable disc;

Figure 3 is a block diagram of a disc recording and/or reproducing apparatus embodying the present invention;

Figure 4 is a block diagram showing the operation of a microcomputer of the recording and/or reproducing apparatus;

Figure 5 is a flow chart showing the operation of a set-up mode for the recording and/or reproducing apparatus;

Figure 6 is a flow chart showing the operation of a record mode;

Figure 7 is a flow chart showing the operation of an eject mode;

Figure 8 shows diagrammatically the relationship between a tune number and performance information recorded by the recording and/or reproducing apparatus on the recordable disc, wherein (A) and (B) show states before and after correction of table of contents (TOC) information, respectively;

Figure 9 is a flow chart showing the operation of a link mode of the recording and/or reproducing apparatus;

Figure 10 is a flow chart showing the operation of a renumbering mode of the recording and/or reproducing apparatus; and

Figure 11 shows diagrammatically the display contents of a display unit during the renumbering mode.

A description will now be given of an embodiment in which the invention is applied to a disc recording and reproducing apparatus wherein an opto-magnetic disc having a perpendicular magnetised film having magneto-optical effects and acting as a recording medium is used as the recordable disc 1 having the recording format as shown in Figure 1, the disc 1 being driven into rotation at a constant linear velocity (CLV) to record and/or reproduce performance information in accordance with the standardised compact disc (CD) data format of Figure 2.

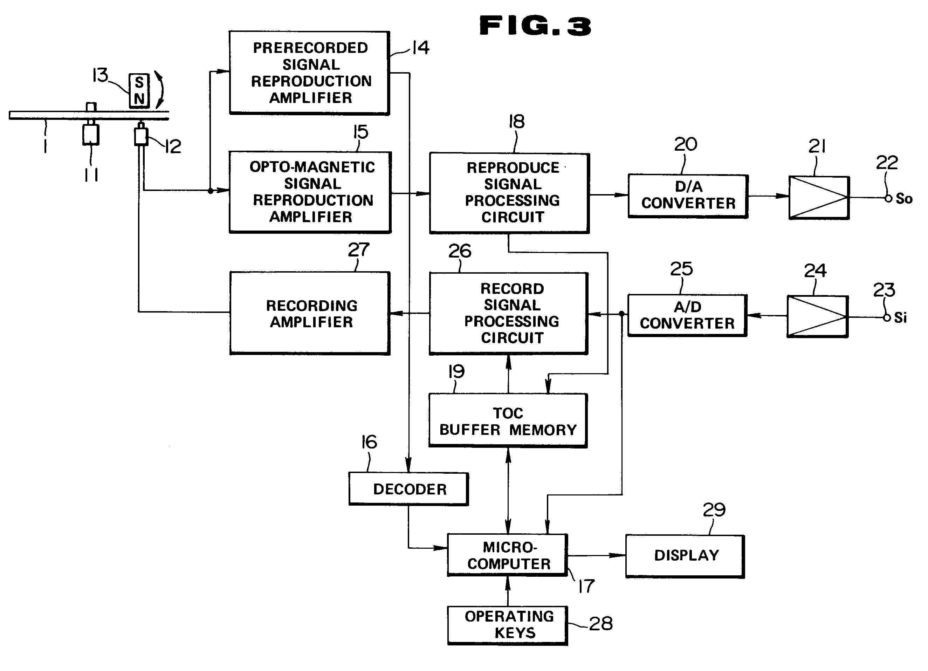

Referring to Figure 3, the disc recording and/or reproducing apparatus includes an optical head 12 and a magnet 13 arranged on opposite sides of the recordable disc 1, which is driven in rotation by a disc motor 11, the optical head 12 being connected to a prerecorded signal reproduction amplifier 14 and to an opto-magnetic signal reproduction amplifier 15 as well as to a recording amplifier 27.

The optical head 12 is formed by optical components including a laser diode, a photo-detector, lenses and beam splitters and is operative to record and/or reproduce information signals on and/or from the disc 1 by irradiating the disc with a laser beam. The magnet 13 operates to produce a magnetic field for recording or erasing the information on or from the disc 1, the sense of the magnetic poles thereof being reversed between the record and erase modes.

Radio frequency (RF) signals reproduced or read out from the disc 1 by the optical head 12 include those from the pre-recorded areas 4, which are supplied through the prerecorded signal reproduction amplifier 14 to a decoder 16 where the absolute address data is decoded and supplied to a microcomputer 17. The signals reproduced from the data recording areas 5 of the disc 1 are supplied through the opto-magnetic signal reproduction amplifier 15 to a reproduce signal processing circuit 18 where the signals are processed in a predetermined manner. The performance information reproduced from the programme area 6 of the disc 1 is supplied from the reproduce signal processing circuit 18 to a digital to analog (D/A) converter 20 where it is converted into an analog form before being outputted as reproduced audio signals So at a signal output terminal 22. The table of contents (TOC) information reproduced from the lead-in area 7 of the disc 1 is supplied from the processing circuit 18 to a TOC buffer memory 19 where it is stored.

Audio signals Si to be recorded in the programme area 6 of the disc 1 are supplied from a signal input terminal 23 through an analog to digital (A/D) converter 25 where they are converted into corresponding digital signals. The performance information, thus digitised in the A/D converter 25, is processed in a predetermined manner in a record signal processing circuit 26, after which it is supplied through the recording amplifier 27 to the optical head 12 so as to be recorded in the programme area 6 of the disc 1.

The output of the A/D converter 25 is also supplied as a silent part signal to the microcomputer 17, to which there are connected operating keys 28 for inputting control data and a display unit 29 for displaying various data.

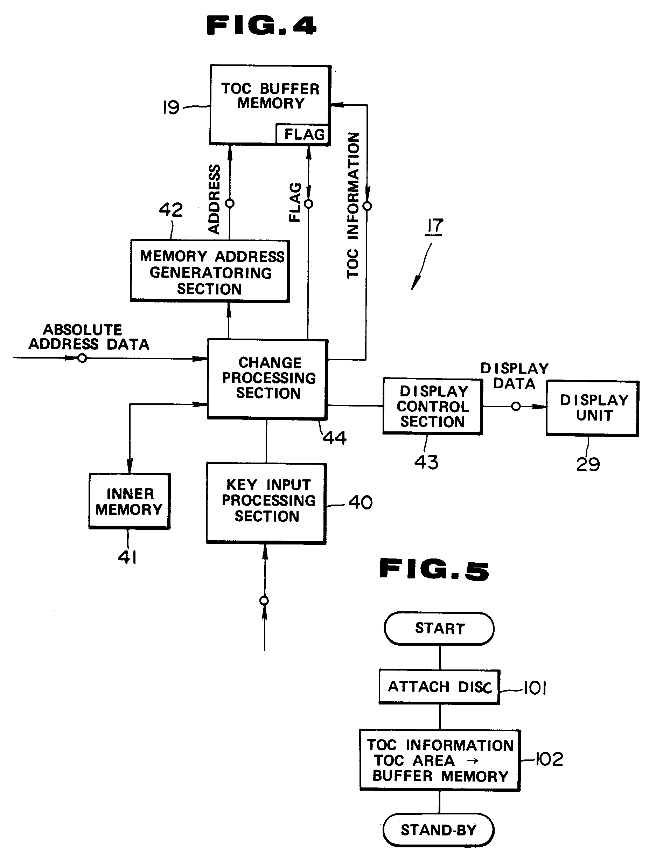

Referring now to the block diagram of Figure 4, wherein essential functions of the microcomputer 17 are illustrated, the microcomputer 17 is formed by a key input processing section 40 for monitoring the operating states of the operating keys 28 and receiving inputted control data, an inner or internal memory 41 for storage of various data such as a predetermined operating program, a memory address generating section 42 for generating data write/read addresses with respect to the TOC buffer memory 19, a display control section 43 for controlling operation of the display unit 29, and a change processing section 44 for making a predetermined change in accordance with the operating program supplied from the internal memory.

Referring now to the flow chart shown in Figure 5, when a recordable disc 1 is attached (loaded) at a step 101 at the commencement of operation, the TOC information recorded in the lead-in area 7 of the disc 1 is read out and reproduced by the optical head 12 so as to be stored in the TOC buffer memory 19 at a step 102, the apparatus then being in a stand-by state.

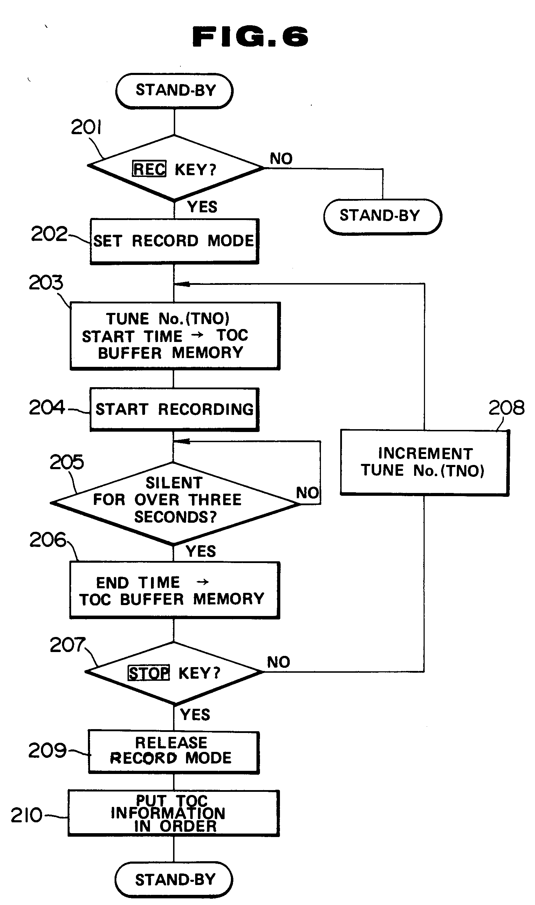

In the stand-by state, the microcomputer 17 monitors the operating states of the operating keys 28 and is ready to receive control data inputted thereto. Referring now to the flow chart of Figure 6, when the microcomputer 17 detects, at a step 201, the operation of a REC (record) key of the operating keys 28, the computer sets up or establishes a record mode (at a step 202) to write information concerning the tune number and the performance start time in the TOC buffer memory 19 at a step 203, before starting the recording of performance information on the programme area 6 at a step 204. The recording operation is continued until a silent period lasting for over three seconds is detected at a step 205. When a silent period of more than three seconds is detected at the step 205, this is determined to be an interval between tunes and absolute time information corresponding to the start of the silent period plus one second is written in the TOC buffer memory 19, at a step 206, as the performance end time. Then, at a step 207, the operating state of a STOP key of the operating keys 28 is monitored. When an indication of operation of the STOP key is not received, the tune number is incremented at a step 208. The program then reverts to the step 203 where the information concerning the tune number and the performance start time is written in the TOC buffer memory 19 and the performance information for the next tune is recorded. The performance information is then consecutively recorded in a similar order. When an indication of operation of the STOP key is received at the step 207, the microcomputer releases the record mode at a step 209, while putting the TOC information in the TOC buffer memory 19 into order, at a step 210, before it goes into the stand-by state. In the operation of putting the TOC information into order at the step 210, when new performance information is over-written on (recorded over) a portion of the programme area 6 where performance information for several tunes, for example, was already recorded, the tune numbers are rearranged in the order of increasing absolute time information so that the tune numbers will be in the correct order.

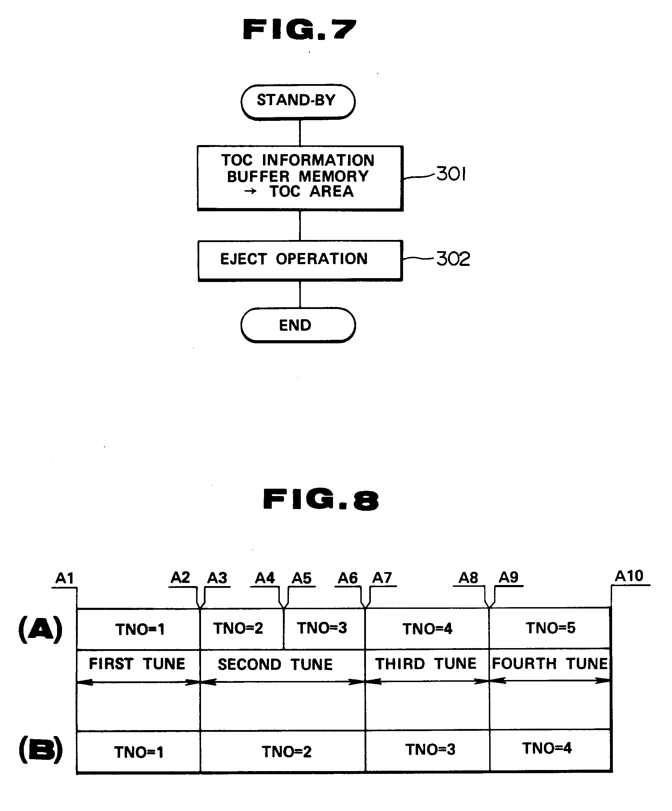

Referring to the flow chart of Figure 7, when an eject mode is commanded in the stand-by state of the recording and/or reproducing apparatus by actuation of an appropriate one of the operating keys 28, the TOC information stored in the TOC buffer memory 19 is recorded by the optical head 12, at a step 301, in the lead-in area 7 of the disc 1. The program then proceeds to a step 301 to effect the ejection of the disc to terminate the operation.

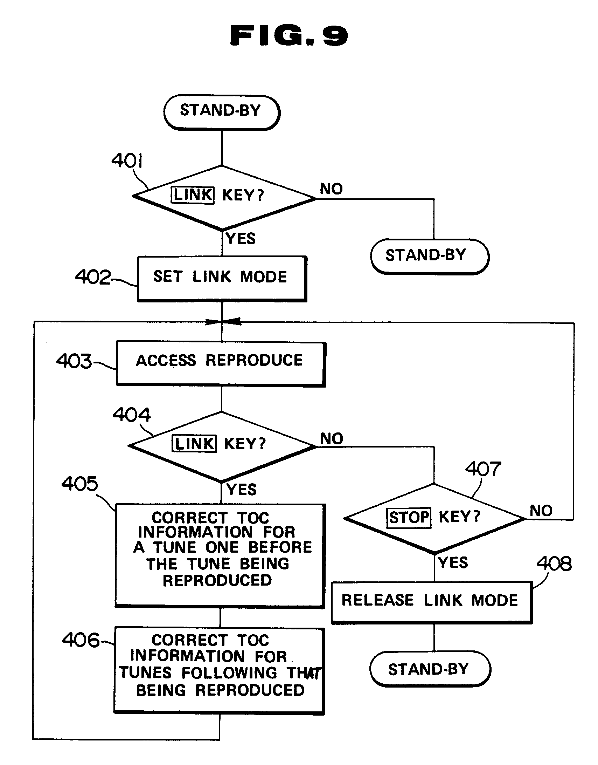

It is now assumed that performance information for four tunes has been recorded by the above-described record mode in the programme area 6 of the disc 1, in such a manner that, as shown at (A) in Figure 8, performance of a first tune is started at a time A1 and terminated at a time A2, performance of a second tune is started at a time A3 and terminated at a time A6, a silent period of not less than three seconds exists between times A4 and A5 during the second tune, performance of a third tune is started at a time A7 and terminated at a time A8, and performance of the fourth tune is started at a time A9 and terminated at a time A10. The silent period continuing for three or more seconds between the times A4 and A5 during the second tune is determined by the silent period detecting operation at the step 205 to be an interval between the tunes, so that TOC information for five tunes, as shown in Table 1 below, is automatically formed with incrementation of the tune number (TNO) and recorded in the lead-in area 7 of the disc 1.

## Table 1: TOC Information

| TNO | Performance Start Time | Performance End Time |
|-----|------------------------|----------------------|
| 1 | A1 | A2 |
| 2 | A3 | A4 |
| 3 | A5 | A6 |
| 4 | A7 | A8 |
| 5 | A9 | A10 |

In the present recording and/or reproducing apparatus, when the disc 1 containing the performance information recorded in the programme area 6 and the TOC information recorded in the lead-in area 7 is to be reproduced, the microcomputer 17 performs an access control operation in such a manner that, in the stand-by mode in which the TOC information is reproduced from the lead-in area 7 so as to be stored in the TOC buffer memory 19, by the above described set-up mode of operation, a reproducing mode is established as the microcomputer detects operation of a PLAY key of the operating keys 28, so that the performance information will be automatically reproduced from the programme area 6 of the disc 1 in accordance with the order of the tune numbers (TNO) of the TOC information.

Referring to the flow chart of Figure 9, the microcomputer establishes a link mode, at a step 402, when it detects operation of a LINK key of the operating meys 28 in the above stand-by mode at a step 401. The performance information of the tune number of a tune desired to be linked is accessed by the operating keys 28, such as the PLAY key or FAST REVERSE (FR) or FAST FORWARD (FF) keys, and the tune is reproduced at a step 403. When the operation of the LINK key is again detected at a step 404, the TOC information in the TOC buffer memory 19 is changed in such a manner that the information concerning the time of termination of the tune number being reproduced is shifted at a step 405 so as to replace the information concerning the time of termination of the tune number one before that being reproduced, the TOC information for the tune number being reproduced is deleted, and that for any subsequent tunes is changed by decrementing the corresponding tune numbers at a step 406. The program then reverts to the access and reproduce operation at the step 403.

The microcomputer 17 monitors the operating state of the STOP key at the step 407 when it has not detected operation of the LINK key at the step 404. When the microcomputer 17 does not detect operation of the STOP key at the step 407, it reverst to the access and reproduce operation at the step 403 so that it performs the LINK operation whilst the tunes recorded on the programme area 6 of the recordable disc 1 are reproduced sequentially.

For example, when the operation of the LINK key is detected at the step 404, whilst the performance information is indicated by the tune number TNO = 3 which is the latter portion of a second tune, which is intrinsically one tune, the TOC information in the TOC buffer memory 19 is rewritten as shown in Table 2 below, from which it can be seen that, by virtue of correcting operation performed at the step 405, the information concerning the performance end time A4 for TNO = 2 is changed to the performance end time A6 for TNO = 3 and that, by virtue of the correcting operation performed at the step 406, the tune number TNO = 4 as well as the following tune numbers are decremented by one.

### Table 2: TOC Information

| TNO | Performance Start Time | Performance End Time |
|---|---|---|
| 1 | A1 | A2 |
| 2 | A3 | A6 |
| 3 | A7 | A8 |
| 4 | A9 | A10 |

When the microcomputer detects operation of the STOP key at the step 407, it releases the link mode at a step 408 and goes into the stand-by state.

When the eject mode is commanded in the stand-by mode, the TOC information which is stored in the above-described corrected state in the TOC buffer memory 19 is re-recorded at the step 301 in the lead-in area 7 of the disc 1 by the optical head 12 by the eject mode operation shown in the flow chart of Figure 7. The eject operation is thereafter performed at the step 302 to terminate the operation.

Thus, the above-described operations of the link and eject modes cause re-recording in the lead-in area 7 of the disc 1 of TOC information in which, as shown in Figure 8 at (B), the tune numbers TNO are correctly allotted to the performance information units corresponding to the first to the fourth tunes recorded in the programme area 6, with the performance information for the second tune being such that the performance start time and the performance end time are A3 and A6, respectively.

In the present embodiment, each of the information units recorded in the programme area 6 of the disc 1 is reproduced on the basis of the TOC information indicating the sequence of these units, while the operating input indicating correction of the TOC information for the information unit being reproduced is received. This results in a simplified and reliable correction of the TOC information. The TOC information thus corrected is re-recorded in the lead-in area 7 of the disc 1 so that the TOC information in the lead-in area may be corrected so as to be in correct register with each of the information units recorded in the programme area 6.

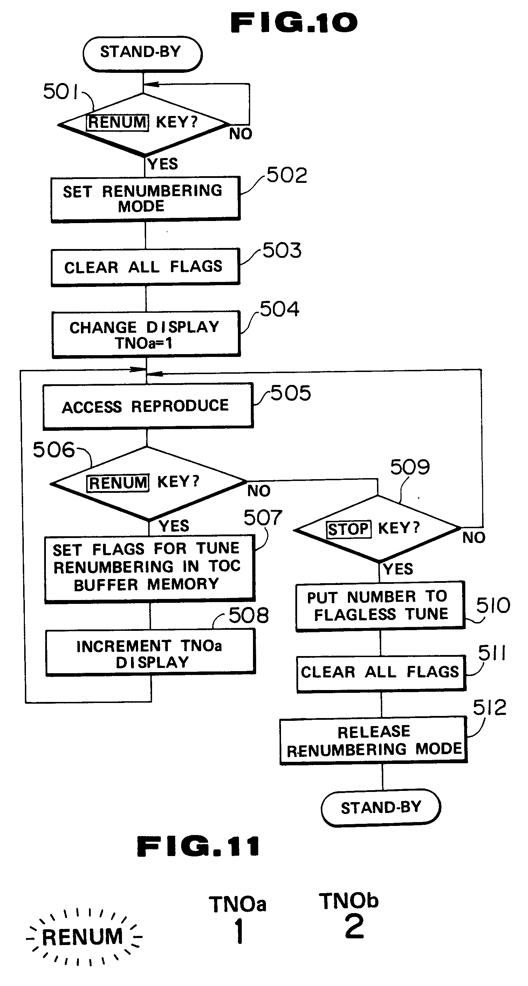

In addition, in the present recording and/or reproducing apparatus, the microcomputer 17 operates, as shown in the flow chart of Figure 10, to establish a renumbering mode at a step 502 when it detects opertion of a RENUM (renumber) key of the operating keys 28 in the above stand-by state at a step 501. Thus, it clears, at a step 503, all flags affixed to each tune number of the TOC information in the TOC buffer memory 19, as shown in Table 3 below, then switches the operation of the display control section 43 and sets the tune number TNOa after the renumbering operation to "1", while causing the indication of the renumbering mode to be displayed, at a step 504, on a display screen of the display unit 29.

It is now assumed that performance information continuing, for example, for 60 minutes may be recorded on the programme area 6 of the disc 1 and that performance information for five tunes has already been recorded on the programme area in such a manner that performance of a first tune is started at 00 minutes 00 seconds and terminated at 05 minutes 00 seconds, performance of a second tune is started at 08 minutes 00 seconds and terminated at 13 minutes 00 seconds, performance of a third tune is started at 15 minutes 03 seconds and terminated at 20 minutes 00 seconds, performance of a fourth tune is started at 28 minutes 00 seconds and terminated at 36 minutes 00 seconds, and performance of the fifth tune is started at 36 minutes 20 seconds and terminated at 41 minutes 00 seconds. It is also assumed that TOC information indicating the respective recorded areas for the first to fifth tunes (as well as the corresponding tune numbers) by the absolute time information or absolute address data is recorded in the lead-in area 7 as TOC information showing the recorded contents of the programme area 6, as shown in Table 3.

## Table 3: TOC Information

| TNO | Performance Start Time | Performance End Time | Flag |
|-----|-----------------------|----------------------|------|
| 1 | 00'00" | 05'00" | 0 |
| 2 | 08'00" | 13'00" | 0 |
| 3 | 15'03" | 20'00" | 0 |
| 4 | 28'00" | 36'00" | 0 |
| 5 | 36'20" | 41'00" | 0 |

When the renumbering mode is established, the following items are displayed, as shown in Figure 11, on the display screen of the display unit 29: an indication "TNOa" indicating the tune number after renumbering; an indication "TNOb" indicating the current tune number for the tune being reproduced, that is the tune number before renumbering; and an upper case letter indication "RENUM" indicating establishment of the renumbering mode.

A tune selected to be a new first tune is accessed and reproduced (at a step 505) from the programme area 6 of the disc 1 by operation of the operating keys 28, such as the PLAY-, FR- or FF-keys. When the microcomputer 17 detects opertion of the RENUM key in this state, at a step 506, it acts on the TOC information in the TOC buffer memory 19 such that the tune number TNOb of the tune being reproduced is changed to a new tune number TNOa after renumbering, at the same time that it sets a flag at a step 507. The microcomputer 17 then increments the tune number TNOa after renumbering for the next tune, these tune numbers being displayed on the screen of the display unit 29 (step 508). The computer 17 then reverts to the access and reproduce operation at the step 505.

When the microcomputer 17 has not detected operation of the RENUM key at the step 506, it monitors the operating state of the STOP key at a step 509. When the computer 17 has not detected operation of the

7

STOP key at the step 509, it reverts to the access and reproduce operation at the step 505. Thus, the renumbering operation is performed in such a manner that, while the tunes recorded in the programme area 6 of the disc 1 are reproduced in succession, new tune numbers TNOa are allotted to the tunes being reproduced, in place of the tune numbers TNOb. For example, when the operation of the RENUM key is detected in the state in which the tune number TNOb is "2" and then the operation of the RENUM key is detected in the state in which the tune number TNOb is "5", the tune numbers are rewritten as shown in Table 4 below.

## Table 4: TOC Information

| TNO | Performance Start Time | Performance End Time | Flag |
|---|---|---|---|
| 1 | 00'00" | 05'00" | 0 |
| 1 | 08'00" | 13'00" | 1 |
| 3 | 15'03" | 20'00" | 0 |
| 4 | 28'00" | 36'00" | 0 |
| 2 | 36'20" | 41'00" | 1 |

When the microcomputer 17 detects, at the step 507, operation of the STOP key, it acts on the TOC information in the TOC buffer memory 19 such that the numbers following the maximum tune number associated with the flag are allotted, at a step 510, in a sequence of increasing numbers to the tune numbers not associated with the flags. After the tune numbers are rearranged in this manner, all flags are cleared at a step 511, as shown in Table 5 below. The microcomputer 17 then releases the renumbering mode at a step 512 and goes into a stand-by state.

## Table 5: TOC Information

| TNO | Performance Start Time | Performance End Time | Flag |
|---|---|---|---|
| 1 | 08'00" | 13'00" | 0 |
| 2 | 36'20" | 41'00" | 0 |
| 3 | 00'00" | 05'00" | 0 |
| 4 | 15'03" | 20'00" | 0 |
| 5 | 28'00" | 36'00" | 0 |

In the above stand-by state, when the eject mode is commanded by operation of the operating keys 28, the eject operation is performed at the step 302 by the eject mode operation shown in the flow chart of Figure 7 after the TOC information stored in the TOC buffer memory 19 is re-recorded at the step 301 in the lead-in area 7 of the disc 1 by the optical head 12. The operation is then terminated.

From the foregoing description it can be seen that the present embodiment provides an opto-magnetic disc recording and/or reproducing apparatus according to which the TOC information reproduced from the lead-in area of the opto-magnetic recordable disc 1 can be re-arranged in any desired sequence commanded by the operating keys 28 so as to be re-recorded in the lead-in area 7, such that the sequence in which the information units recorded in the programme area 6 of the disc 1 are reproduced may be easily and optionally commanded by the TOC information contained in the lead-in area 7.

**Claims**

1. A disc recording and/or reproducing apparatus for a recordable disc (1) which is previously provided with absolute addresses, and which has a programme area (6) in which data such as performance information is recorded and a lead-in area (7) in which archival information indicative of the recorded contents of the programme area (6) is recorded whereby the programme area can be reproduced on the basis of the archival information recorded in the lead-in area (7), the apparatus comprising archival information storage means (19) for storing archival information reproduced from the lead-in area (7), characterised by change control means (44) for optionally changing the sequence of the archival information stored in the archival information storage means (19), operating input means (40, 28) for commanding the sequence of the archival information, and recording means (17, 12) for reading the archival information, the sequence of which has been changed, from the archival information storage means (19) for re-recording in the lead-in area (7) of the recordable disc (1).

2. Apparatus according to claim 1, wherein the change control means (44) is provided with means for automatically allotting numbers, consecutive to the maximum number of archival information commanded to be changed by the operating input means (40, 28), to archival information not commanded to be changed by the operating input means.

3. Apparatus according to claim 1, comprising means (29) for displaying selection of an operating mode enabling changing of the sequence of the archival information by the change control means (44).

4. Apparatus according to claim 1, comprising means (29) for displaying a number (TNOb) to be changed by changing the sequence of the archival information by the change control means (44), in addition to the new number (TNOa).

5. Apparatus according to claim 2, comprising record control means (17) for sensing a state of absence of data to be inputted and recorded in the programme area (6) and automatically recording archival information indicating the sequence of information units recorded in the programme area.

6. Apparatus according to claim 5, wherein the change control means (44) includes correction processing means for correcting the archival information stored in the archival information storage means (19) on receipt of an operating input by the operating input means (40, 28) during reproduction of the programme area (6) so that the information unit being reproduced is corrected so as to be consecutive to the preceding information unit.

7. A method of recording on or reproducing from a recordable disc (1) which is previously provided with absolute addresses, and which has a programme area (6) in which data such as performance information is recorded and a lead-in area (7) in which archival information indicative of the recorded contents of the programme area (6) is recorded whereby the programme area (6) can be reproduced on the basis of the archival information recorded in the lead-in area (7), wherein archival information reproduced from the lead-in area (7) is stored, characterised in that the sequence of units of the archival information is optionally changed and then re-recorded in the lead-in area (7), and the programme area (6) is reproduced on the basis of the archival information in the lead-in area (7).

8. A method according to claim 7, wherein the sequence of the archival information units is optionally commanded and the sequence of archival information units whose sequence is not commanded to be changed is automatically determined so as to be consecutive to the maximum number of the archival information units whose sequence is commanded to be changed.

9. A method of recording on or reproducing from a recordable disc (1) which is previously provided with absolute addresses, and which has a programme area (6) in which data such as performance information is recorded and a lead-in area (7) in which archival information indicative of the recorded contents of the programme area (6) is recorded whereby the programme area (6) can be reproduced on the basis of the archival information recorded in the lead-in area (7) having been reproduced and stored, characterised in that: archival information indicative of the sequence of information units

9

recorded in the programme area (6) is automatically recorded in the lead-in area (7) on the basis of sensing the absence of the data to be inputted and recorded in the programme area; the stored archival information is corrected on receipt of an operating input during reproduction of the programme area (6) so that the information unit being reproduced will be consecutive to the preceding information unit, the thus-corrected archival information being re-recorded in the lead-in area (7); and each of the information units recorded in the programme area (6) is sequentially reproduced on the basis of the archival information in the lead-in area (7).

**Patentansprüche**

1. Plattenaufzeichnungs- und/oder Wiedergabevorrichtung für eine bespielbare Platte (1), die vorher mit absoluten Adressen versehen ist, und die einen Programmbereich (6) hat, in welchem Daten wie eine Darbietungsinformation aufgezeichnet sind, und einen Einlaufsignalbereich (7), in welchem eine Archivierungsinformation, die den aufgezeichneten Inhalt des Programmbereichs (6) aufzeigt, aufgezeichnet ist, wodurch der Programmbereich auf der Grundlage der Archivierungsinformation, die im Einlaufbereich (7) aufgezeichnet ist, reproduziert werden kann, wobei die Vorrichtung eine Speichereinrichtung (19) für die Archivierungsinformation umfaßt, um die Archivierungsinformation, die aus dem Einlaufbereich (7) reproduziert wird, zu speichern, gekennzeichnet durch eine Änderungssteuereinrichtung (44) zur beliebigen Änderung der Reihenfolge der Archivierungsinformation, die in der Speichereinrichtung (19) für die Archivierungsinformation gespeichert ist, Bedienungseingabemittel (40,28) zum Befehlen der Reihenfolge der Archivierungsinformation, und Aufzeichnungsmittel (17,12) zum Lesen der Archivierungsinformation, deren Reihenfolge von der Speichereinrichtung (19) für die Archivierungsinformation geändert wurde, um sie im Einlaufbereich (7) der bespielbaren Platte (1) wiederaufzuzeichnen.

2. Vorrichtung nach Anspruch 1, wobei die Änderungssteuereinrichtung (44) mit Mitteln vorgesehen ist, um Nummern aufeinanderfolgend auf die maximale Nummer der Archivierungsinformation automatisch zuzuteilen, der befohlen wurde, durch die Bedienungseingabemittel (40,28) geändert zu werden, gegenüber der Archivierungsinformation, der nicht befohlen wurde, durch die Bedienungseingabemittel geändert zu werden.

3. Vorrichtung nach Anspruch 1, die Mittel (29) zur Anzeige der Auswahl eines Bedienungsmodus umfaßt, die es ermöglichen, die Reihenfolge der Archivierungsinformation durch die Änderungssteuereinrichtung (44) zu ändern.

4. Vorrichtung nach Anspruch 1, die Mittel (29) zur Anzeige einer Nummer (TNOb) umfaßt, die durch Änderung der Reihenfolge der Archivierungsinformation durch die Änderungssteuereinrichtung (44) durch Hinzufügen einer neuen Nummer (TNOa) geändert werden soll.

5. Vorrichtung nach Anspruch 2, die eine Aufzeichnungssteuereinrichtung (17) umfaßt, um einen Status einer Abwesenheit von Daten abzutasten, die einzugeben und im Programmbereich (6) zu speichern sind, und um eine Archivierungsinformation automatisch aufzuzeichnen, die die Reihenfolge der Informationseinheiten anzeigt, die im Programmbereich gespeichert sind.

6. Vorrichtung nach Anspruch 5, wobei die Änderungssteuereinrichtung (44) Korrekturverarbeitungsmittel zur Korrektur der Archivierungsinformation einschließt, die in der Speichereinrichtung (19) für die Archivierungsinformation bei Erhalt einer Bedienungseingabe durch die Bedienungseingabemittel (40,28) während der Reproduktion des Programmbereichs (6) gespeichert wird, so daß die Informationseinheit, die gerade reproduziert wird, so korrigiert wird, daß sie der vorhergehenden Informationseinheit folgt.

7. Verfahren zum Bespielen oder Reproduzieren einer bespielbaren Platte (1), die vorher mit absoluten Adressen versehen ist, und die einen Programmbereich (6) hat, in welchem Daten wie eine Darbietungsinformation aufgezeichnet sind, und die einen Einlaufbereich (7) hat, in welchem eine Archivierungsinformation, die den aufgezeichneten Inhalt des Programmbereichs (6) aufzeigt, aufgezeichnet ist, wodurch der Programmbereich (6) auf der Grundlage der Archivierungsinformation, die im Einlaufbereich (7) aufgezeichnet ist, reproduziert werden kann, worin die Archivierungsinformation, die aus dem Einlaufbereich (7) reproduziert wird, gespeichert wird, dadurch gekennzeichnet, daß die Reihenfolge der Archivierungsinformationseinheiten beliebig geändert wird und dann wieder im Einlaufbereich (7)

EP 0 281 415 B1

aufgezeichnet wird, und der Programmbereich (6) auf der Grundlage der Archivierungsinformation im Einlaufbereich (7) reproduziert wird.

8. Verfahren nach Anspruch 7, wobei die Reihenfolge der Archivierungsinformationseinheiten beliebig befohlen wird und die Reihenfolge der Archivierungsinformationseinheiten, deren Reihenfolge nicht befohlen wurde, geändert zu werden, automatisch so bestimmt wird, daß sie der maximalen Nummer der Archivierungsinformationseinheiten folgt, deren Reihenfolge befohlen wird, geändert zu werden.

9. Verfahren zum Bespielen oder Reproduzieren einer bespielbaren Platte (1), die vorher mit absoluten Adressen vorgesehen ist, und die einen Programmbereich (6) hat, in welchem Daten wie eine Darbietungsinformation aufgezeichnet sind, und die einen Einlaufbereich (7) hat, in welchem eine Archivierungsinformation, die den aufgezeichneten Inhalt des Programmbereichs (6) aufzeigt, aufgezeichnet ist, wodurch der Programmbereich (6) auf der Grundlage der Archivierungsinformation, die im Einlaufbereich (7) aufgezeichnet ist, die reproduziert und gespeichert wurde, reproduziert werden kann, dadurch gekennzeichnet:
eine Archivierungsinformation, die die Reihenfolge der Informationseinheiten aufzeigt, die im Programmbereich (6) aufgezeichnet ist, wird automatisch im Einlaufbereich (7) auf der Grundlage des Abtastens der Abwesenheit von Daten aufgezeichnet, die im Programmbereich eingegeben und aufgezeichnet werden sollen; die gespeicherte Archivierungsinformation wird bei Empfang einer Bedienungseingabe während der Reproduktion des Programmbereichs (6) korrigiert, so daß die Informationseinheit, die gerade reproduziert wird, der vorhergehenden Informationseinheit folgt, wobei die so korrigierte Archivierungsinformation wieder im Einlaufbereich (7) aufgezeichnet wird; und jede der Informationseinheiten, die im Programmbereich (6) aufgezeichnet ist, wird der Reihe nach auf der Grundlage der Archivierungsinformation im Einlaufbereich (7) reproduziert.

**Revendications**

1. Appareil d'enregistrement et/ou de reproduction à disque pour un disque enregistrable (1) qui est préalablement muni d'adresses absolues et qui comporte une zone de programme (6) dans laquelle des données telles qu'une information d'émission sont enregistrées et une zone d'entrée (7) dans laquelle une information d'archivage indicatrice du contenu enregistré de la zone de programme (6) est enregistrée d'où il résulte que la zone de programme peut être reproduite sur la base de l'information d'archivage enregistrée dans la zone d'entrée (7), l'appareil comprenant un moyen de stockage d'information d'archivage (19) pour stocker une information d'archivage reproduite à partir de la zone d'entrée (7), caractérisé par un moyen de commande de modification (44) pour modifier optionnellement la séquence de l'information d'archivage stockée dans le moyen de stockage d'information d'archivage (19), un moyen d'entrée d'actionnement (40, 28) pour commander la séquence de l'information d'archivage et un moyen d'enregistrement (17, 12) pour lire l'information d'archivage dont la séquence a été modifiée dans le moyen de stockage d'information d'archivage (19) en vue d'un préenregistrement dans la zone d'entrée (7) du disque enregistrable (1).

2. Appareil selon la revendication 1, dans lequel le moyen de commande de modification (44) est muni d'un moyen pour allouer automatiquement des numéros consécutifs au numéro maximum de l'information d'archivage dont la modification est commandée par le moyen d'entrée d'actionnement (40, 28) à une information d'archivage dont la modification n'est pas commandée par le moyen d'entrée d'actionnement.

3. Appareil selon la revendication 1, comprenant un moyen (29) pour afficher une sélection d'un mode d'actionnement permettant la modification de la séquence de l'information d'archivage au moyen du moyen de commande de modification (44).

4. Appareil selon la revendication 1, comprenant un moyen (29) pour afficher un numéro (TNOb) destiné à être modifié en modifiant la séquence de l'information d'archivage au moyen du moyen de commande de modification (44) en plus du nouveau numéro (TNOa).

5. Appareil selon la revendication 2, comprenant un moyen de commande d'enregistrement (17) pour détecter un état d'absence de données destinées à être entrées et enregistrées dans la zone de programme (6) et pour enregistrer automatiquement une information d'archivage indiquant la séquence

11

EP 0 281 415 B1

des unités d'information enregistrées dans la zone de programme.

**6.** Appareil selon la revendication 5, dans lequel le moyen de commande de modification (44) inclut un moyen de traitement de correction pour corriger l'information d'archivage stockée dans le moyen de stockage d'information d'archivage (19) suite à la réception d'une entrée d'actionnement entrée par le moyen d'entrée d'actionnement (40, 28) pendant la reproduction de la zone de programme (6) de telle sorte que l'unité d'information qui est reproduite soit corrigée de manière à être consécutive à l'unité d'information précédente.

**7.** Procédé d'enregistrement ou de reproduction à partir d'un disque enregistrable (1) qui est préalablement muni d'adresses absolues et qui comporte une zone de programme (6) dans laquelle des données telles qu'une information d'émission sont enregistrées et une zone d'entrée (7) dans laquelle une information d'archivage indicatrice du contenu enregistré de la zone de programme (6) est enregistrée d'où il résulte que la zone de programme (6) peut être reproduite sur la base de l'information d'archivage enregistrée dans la zone d'entrée (7), dans lequel une information d'archivage reproduite depuis la zone d'entrée (7) est stockée, caractérisé en ce que la séquence d'unités de l'information d'archivage est optionnellement modifiée puis ré-enregistrée dans la zone d'entrée (7) et la zone de programme (6) est reproduite sur la base de l'information d'archivage contenue dans la zone d'entrée (7).

**8.** Procédé selon la revendication 7, dans lequel la séquence des unités d'information d'archivage est optionnellement commandée et la séquence des unités d'information d'archivage dont la modification de séquence n'est pas commandée est automatiquement déterminée de manière à être consécutive au numéro maximum des unités d'information d'archivage dont la modification de la séquence est commandée.

**9.** Procédé d'enregistrement ou de reproduction à partir d'un disque enregistrable (1) qui est préalablement muni d'adresses absolues et qui comporte une zone de programme (6) dans laquelle des données telles qu'une information d'émission sont enregistrées et une zone d'entrée (7) dans laquelle une information d'archivage indicatrice du contenu enregistré de la zone de programme (6) est enregistrée d'où il résulte que la zone de programme (6) peut être reproduite sur la base de l'information d'archivage enregistrée dans la zone d'entrée (7) qui a été reproduite et stockée, caractérisé en ce qu'une information d'archivage indicatrice de la séquence d'unités d'information enregistrées dans la zone de programme (6) est automatiquement enregistrée dans la zone d'entrée (7) sur la base de la détection de l'absence des données destinées à être entrées et enregistrées dans la zone de programme ; l'information d'archivage stockée est corrigée suite à la réception d'une entrée d'actionnement pendant la reproduction de la zone de programme (6) de telle sorte que l'unité d'information qui est reproduite soit consécutive à l'unité d'information précédente, l'information d'archive ainsi corrigée étant enregistrée dans la zone d'entrée (7) ; et chacune des unités d'information enregistrées dans la zone de programme (6) est reproduite séquentiellement sur la base de l'information d'archivage contenue dans la zone d'entrée (7).

12

# FIG.1

EP 0 281 415 B1

# FIG.2

**1 FRAME (588 CHANNEL BITS)**

| DATA | PARITY | DATA | PARITY |

| 24 | 14 | 14 | 14 | 14 | 14 | 14 | 14 | 14 | 14 | 14 | 14 | 14 | 14 | 14 | 14 | 14 | 14 | 14 | 14 | 14 | 14 | 14 | 14 | 14 | 14 | 14 | 14 | 14 | 14 | 14 | 14 | 14 |

3 3 3 3 3 3 3 3 3 3 3 3 3 3 3 3 3 3 3 3 3 3 3 3 3 3 3 3 3 3 3 3

SUBCODE
FRAME

DATA RECORDING AREA

4 ⌐PRERECORDED
AREA

5

EP 0 281 415 B1

FIG.3

# FIG.4

# FIG.5

# FIG.6

STAND-BY

201 — REC KEY? — NO → STAND-BY

YES

202 — SET RECORD MODE

203 — TUNE No.(TNO) START TIME → TOC BUFFER MEMORY

204 — START RECORDING

205 — SILENT FOR OVER THREE SECONDS? — NO

208 — INCREMENT TUNE No.(TNO)

YES

206 — END TIME → TOC BUFFER MEMORY

207 — STOP KEY? — NO

YES

209 — RELEASE RECORD MODE

210 — PUT TOC INFORMATION IN ORDER

STAND-BY

# FIG.7

```
        ┌─────────────┐
        │  STAND-BY   │
        └──────┬──────┘
               │
    ┌──────────┴──────────┐
    │  TOC  INFORMATION   │
    │  BUFFER  MEMORY     │──── 301
    │   →  TOC  AREA      │
    └──────────┬──────────┘
               │
    ┌──────────┴──────────┐
    │  EJECT  OPERATION   │──── 302
    └──────────┬──────────┘
               │
        ┌──────┴──────┐
        │     END     │
        └─────────────┘
```

# FIG.8

| | A1 | A2 A3 | A4 A5 | A6 A7 | A8 A9 | A10 |
|---|---|---|---|---|---|---|
| **(A)** | TNO=1 | TNO=2 | TNO=3 | TNO=4 | TNO=5 | |
| | FIRST TUNE | SECOND TUNE | | THIRD TUNE | FOURTH TUNE | |
| | | | | | | |
| **(B)** | TNO=1 | TNO=2 | | TNO=3 | TNO=4 | |

# FIG.9

```
                    ┌──────────┐
                    │ STAND-BY │
                    └────┬─────┘
                         │
401              ╱───────┴───────╲        NO
            ────◁  [LINK] KEY?   ▷────────┐
                 ╲───────┬───────╱        │
                         │ YES            │
                         │          ┌──────────┐
402     ┌────────────────┴──┐       │ STAND-BY │
        │  SET LINK MODE    │       └──────────┘
        └────────┬──────────┘
                 │
    ┌────────────┼────────────────────────────────┐
    │            │                                 │
403 │   ┌────────┴──────────┐                      │
    │   │ ACCESS REPRODUCE  │                      │
    │   └────────┬──────────┘                      │
    │            │                                 │
404 │     ╱──────┴───────╲      NO                 │
    │ ───◁  [LINK] KEY?  ▷──────────┐              │
    │     ╲──────┬───────╱          │              │
    │            │ YES          407 │              │
405 │  ┌─────────┴─────────┐     ╱──┴───╲    NO     │
    │  │  CORRECT TOC      │ ───◁[STOP] ▷──────────┘
    │  │  INFORMATION FOR  │    ╲ KEY? ╱
    │  │  A TUNE ONE BEFORE│     ╲──┬──╱
    │  │  THE TUNE BEING   │        │ YES
    │  │  REPRODUCED       │   408  │
    │  └─────────┬─────────┘  ┌─────┴──────────┐
    │            │            │ RELEASE LINK   │
406 │  ┌─────────┴─────────┐  │     MODE       │
    │  │  CORRECT TOC      │  └─────┬──────────┘
    │  │  INFORMATION FOR  │        │
    │  │  TUNES FOLLOWING  │   ┌────┴─────┐
    │  │  THAT BEING       │   │ STAND-BY │
    │  │  REPRODUCED       │   └──────────┘
    │  └─────────┬─────────┘
    └────────────┘
```

# FIG.10

STAND-BY

501 ◇ RENUM KEY? → NO

YES

502 SET RENUMBERING MODE

503 CLEAR ALL FLAGS

504 CHANGE DISPLAY TNOa=1

505 ACCESS REPRODUCE

506 ◇ RENUM KEY? → NO

YES

507 SET FLAGS FOR TUNE RENUMBERING IN TOC BUFFER MEMORY

508 INCREMENT TNOa DISPLAY

509 ◇ STOP KEY? → NO

YES

510 PUT NUMBER TO FLAGLESS TUNE

511 CLEAR ALL FLAGS

512 RELEASE RENUMBERING MODE

STAND-BY

# FIG.11

RENUM

TNOa
1

TNOb
2

20